# EUROPÄISCHE PATENTSCHRIFT

(11) **EP 1 789 290 B1**
(45) Veröffentlichungstag und Bekanntmachung des Hinweises auf die Patenterteilung: **27.02.2008**
(21) Anmeldenummer: 05775840.1
(22) Anmeldetag: 13.07.2005
(51) Int. Cl.: B60R 21/0136, B60R 21/34

(54) **KONTAKTSENSORIK FÜR EIN FAHRZEUG**
CONTACT SENSOR SYSTEM FOR A VEHICLE
TECHNIQUE SENSORIELLE DE CONTACT POUR VEHICULES

(30) Priorität: 02.09.2004 DE 102004042379
(43) Veröffentlichungstag der Anmeldung: 30.05.2007
(73) Patentinhaber: ROBERT BOSCH GMBH, 70442 Stuttgart (DE)
(72) Erfinder: WELLHOEFER, Matthias, 71701 Schwieberdingen (DE)
(86) Internationale Anmeldenummer: PCT/EP2005/053358
(87) Internationale Veröffentlichungsnummer: WO 2006/024574

(56) Entgegenhaltungen:
- WO-A-20/04054850
- WO-A-20/04065163
- DE-A1- 10 215 384
- DE-C1- 10 140 119
- US-B1- 6 516 278

## Beschreibung

### Stand der Technik

Die Erfindung geht aus von einer Kontaktsensorik für ein Fahrzeug nach der Gattung des unabhängigen Patentanspruchs.

Um im Falle von Frontcrashs eine frühzeitige Information über die Crashschwere zu erhalten und einen Offset, z.B. 40% Überdeckung, erkennen zu können, werden normalerweise zwei so genannte Upfrontsensoren (UFS) im Frontbereich des Fahrzeugs verbaut. In der Regel sind dies Beschleunigungssensoren, die einen sehr hohen Messbereich von beispielsweise 1000g oder mehr aufweisen müssen, damit eine sichere differenzierte Signalauswertung möglich ist. Die UFS können zusätzlich zur Plausibilisierung von Frontcrashs eingesetzt werden.

Zukünftig werden zur Erkennung einer Kollision mit einem Fußgänger zusätzliche Beschleunigungssensoren im Frontbereich des Fahrzeugs angebracht, die allerdings bezüglich Auflösung und Messbereich eine vollkommen andere Anforderungen als die Upfrontsensoren haben. Die Fußgängerschutzsensoren (FGS) haben beispielsweise einen Messbereich von 50g oder weniger.

Als preisgünstige Alternative zu den Upfrontsensoren können so genannte Upfront-Switches (UFSWs) eingesetzt werden. Die UFSWs ermöglichen zwar keine vergleichbaren umfassenden und differenzierten Signalauswertungen wie ein Beschleunigungssensor, liefern aber dennoch genug Informationen für eine Crashschwerediskriminierung und eine Offseterkennung. Ein UFSW ist beispielsweise wie ein Hamlinschalter aufgebaut, bei welchem ein zylindrischer Permanentmagnet auf einem Führungsrohr geführt und mit einer Feder an einem Anschlag des Rohrs gehalten wird. Erfährt der UFSW eine Beschleunigung, so wird der Magnet ab einer vorgegebenen Schwelle, welche durch die Federsteifigkeit und die Masse des Magneten einmal fest vorgegeben wird, über das Führungsrohr bewegt. Im Innern des Rohrs befindet sich ein Reed-Kontakt, d.h. sobald der Magnet sich über den Kontakten befindet wird dieser elektrische Schaltkontakt magnetisch geschlossen. Die entscheidenden Parameter zur Bestimmung der Crashschwere und des Offsets sind die festgelegte Schaltschwelle und ein Zeitpunkt des Schaltvorgangs. Bei einem schweren Crash schaltet der UFSW früher als bei einem weichen, leichten Crash.

In der Offenlegungsschrift WO 2004/054850 A1, als nächstliegender Stand der Technik betrachtet, wird eine Kontaktsensorik für ein Fahrzeug mit mindestens einem Sensor beschrieben. Der mindestens eine Sensor erzeugt Sensordaten in einem niedrigen Wertebereich, der für eine Erkennung einer Kollision mit einem Fußgänger optimiert ist. Zur Erkennung eines Aufpralls mit einem Fußgänger vergleicht eine Auswerteeinheit die von dem mindestens einen Sensor erzeugten Sensordaten mit mindestens einem Schwellwert.

### Vorteile der Erfindung

Die erfindungsgemäße Kontaktsensorik für ein Fahrzeug mit den Merkmalen des unabhängigen Patentanspruchs hat demgegenüber den Vorteil, dass im Fahrzeugfrontbereich nur ein bis zwei Beschleunigungssensoren erforderlich sind, die für eine Erkennung einer Kollision mit einem Fußgänger optimiert sind, d.h. einen Wertebereich von bis zu 50g aufweisen, wodurch im Falle einer Kollision mit einem Fußgänger ein optimaler Schutz für den Fußgänger gewährleistet wird und trotzdem eine Crashschwerebestimmung und/oder eine Offseterkennung und/oder eine Plausibilitätsprüfung durchführbar ist. In vorteilhafter Weise vergleicht eine Auswerteeinheit die Sensordaten der Beschleunigungssensoren mit mindestens einem Schwellwert um eine Crashschwerediskriminierung und/oder eine Offseterkennung und/oder eine Plausibilitätsprüfung durchzuführen. Dadurch bilden die Beschleunigungssensoren mit dem Wertebereich für die optimale Fußgängererkennung und die Auswerteeinheit in vorteilhafter Weise mindestens einen virtuellen Upfront-Switch, mit dem ein ausreichend genaue Crashschwerebestimmung und Offseterkennung durchführbar ist.

Die erfindungsgemäße Kontaktsensorik für ein Fahrzeug ermöglicht somit in vorteilhafter Weise zusätzlich zur Fußgängererkennung mit einem minimalen Applikationsaufwand und ohne zusätzlichen Mechanik- und Verkabelungsaufwand zur Füßgängerschutzsensorik eine Crashschwerebestimmung und/oder eine Offseterkennung und/oder ein Plausibilitätsprüfung.

Durch die in den abhängigen Ansprüchen aufgeführten Maßnahmen und Weiterbildungen sind vorteilhafte Verbesserungen der im unabhängigen Patentanspruch angegebenen Kontaktsensorik möglich.

Besonders vorteilhaft ist, dass die Auswerteeinheit der Kontaktsensorik eine Zeitinformation aus den Zeitpunkten erzeugt, an denen die Sensordaten den mindestens einen Schwellwert erreichen und/oder überschreiten und dadurch eine zugehörige Schaltschwelle auslösen. Die erzeugten Zeitinformationen können in vorteilhafter Weise für die Bewertung der Crashschwere und/oder die Offsetbestimmung verwendet werden.

Weiterhin ist es von Vorteil, dass die Auswerteeinheit eine erste Zeitinformation aus der Zeitspanne erzeugt, die zwischen einem Auslösen einer ersten Schaltschwelle und einem Auslösen einer zweiten Schaltschwelle verstreicht, wobei ein erster Schwellwert der ersten Schaltschwelle und ein zweiter Schwellwert der zweiten Schaltschwelle zugeordnet ist und der zweite Schwellwert höher als der erste Schwellwert ist. Dadurch ist es ohne großen Aufwand möglich eine Aussage über die Crashschwere zu treffen, ohne den genauen Startzeitpunkt zu kennen, da der genaue Kontaktzeitpunkt für die Bewertung der Crashschwere nicht mehr so wichtig ist.

Ein erster Schwellwert kann beispielsweise eine Rauschschwelle repräsentieren. Bei einer Überschreitung dieser Rauschschwelle erzeugt die Auswerteeinheit ein Signal, das einen Auftreffzeitpunkt eines Objektes auf den Fahrzeugfrontbereich repräsentiert.

Die Auswerteeinheit kann in vorteilhafter Weise die Schwellwerte in Abhängigkeit von Schwellwerlparametern verändern. Dadurch können die Schwellwerte auch nach dem Einbau der Kontaktsensorik im Fahrzeug einfach und schnell verändert und an verschiedene Einbauorte und verschiedene Fahrzeugstrukturen individuell angepasst werden. Auch bei einer Ausführung als mehrstufiger virtueller Upfront-Switch können die Schwellwerte durch Ändern der Parameter mit minimalen Applikationsaufwand einfach und schnell angepasst werden. So können die Schwellwerte beispielsweise nach Ablauf eines Referenzcrashprogramms optimal an die jeweiligen Einbauposition und das individuelle Fahrzeug angepasst werden.

Die Sensordaten umfassen in vorteilhafter Weise Beschleunigungsdaten und/oder absolute Integrale der Beschleunigungsdaten und/oder Fensterintegrale der Beschleunigungsdaten, wobei die zugehörigen Schwellwerte eine Ableitung der Integralwerte der Beschleunigungsdaten und/oder direkte Integralwerte umfassen können.

### Zeichnung

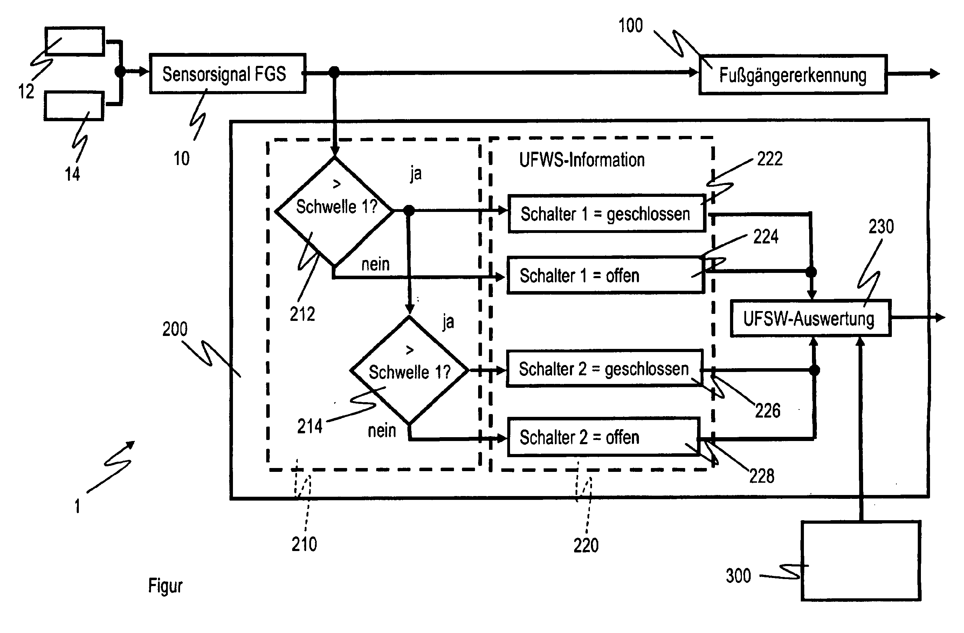

Ein Ausführungsbeispiel der Erfindung ist in der Zeichnung dargestellt und wird nachfolgend beschrieben. Die einzige Figur zeigt ein Blockdiagramm eines Ausführungsbeispiels einer erfindungsgemäßen Kontaktsensorik für ein Fahrzeug.

### Beschreibung

Dadurch dass in naher Zukunft zum Zweck des Fußgängerschutzes (FGS) zusätzlich mindestens ein bis zwei zusätzliche Beschleunigungssensoren im Frontbereich des Fahrzeugs verbaut werden müssen, wird eine Kontaktsensorik für ein Fahrzeug wesentlich teurer. Die Akzeptanz beim Kunden ist heute schon eher gering und es stehen bereits heute Forderungen im Raum, die Anzahl der Beschleunigungssensoren im Fahrzeugfrontbereich zu reduzieren. Durch den Einbau von vier Beschleunigungssensoren mit unterschiedlichen Messbereichen werden beispielsweise eine höhere Stromversorgung, mehr Sensorkanäle zum Einlesen, zusätzliche Sensorvecarbeitungszeit, mehr Pins am Steuergerätestecker und ein größerer Kabelbaum sowie Verkabelungsaufwand erforderlich.

Erfindungsgemäß wird vorgeschlagen, nur ein bis zwei Beschleunigungssensoren im Fahrzeug zu verbauen, die für den Fußgängerschutz optimiert sind, also einen sehr geringen Messbereich aufweisen. Im Falle eines Zusammenstosses mit einem Fußgänger kann durch die kompromisslose Funktionalität der optimale Schutz für den Fußgänger gewährleistet werden. Eine Auswerteeinheit vergleicht die Sensordaten zur Crashschwerebestimmung und/oder zur Offseterkennung und/oder zur Plausibilitätsprüfung mit mindestens einem Schwellwert.

Wie aus der Figur ersichtlich ist, umfasst das Ausführungsbeispiel der Kontaktsensorik 1 für ein Fahrzeug zwei Beschleunigungssensoren 12, 14, die Sensorsignale 10 in einem geringen Wertebereich erzeugen, welche vorzugsweise eine Beschleunigung von weniger als 50g repräsentieren, einen Block 100, in welchem die für eine Erkennung einer Kollision mit einem Fußgänger optimalen Sensorsignale 10 ausgewertet werden, um entsprechende Fußgängerschutzmittel zu aktivieren, wenn eine Kollision mit einem Fußgänger erkannt wird, und eine Auswerteeinheit 200.

Die Sensorsignale 10 der Fußgängerschutzsensoren 12 und 14 werden von der Steuereinheit 200 in einem gestrichelt dargestellten Vergleichsbereich 210 mit einem ersten Schwellwert 212, z.B. 10g, und einem zweiten Schwellwert 214, z.B. 25g, verglichen, d.h. die Fußgängerschutzsensoren 12, 14 und die Auswerteeinheit 200 bilden einen virtuellen zweistufigen Upfront-Switch. Die zugehörigen Informationen für die Erzeugung der Schaltschwellen wird in einem gestrichelt dargestellten Schaltschwellenbereich 220 erzeugt. Die im Schaltschwellenbereich 220 erzeugten Schaltsignale 222, 224, 226, 228 werden an eine Schaltschwellenauswerteeinheit 230 übertragen, welche die Ausgabesignale des virtuellen Upfront-Switches erzeugt und ausgibt. Optional kann die Schaltschwellenausgabeeinheit 230 Daten von einer PreCrash-Sensorik bei der Auswertung berücksichtigen, die beispielsweise eine Zeitinformation zur Verfügung stellt, welche den Auftreffzeitpunkt eines Objektes auf den Fahrzeugftontbereich repräsentiert.

Im Schaltschwellenbereich 220 wird das Sensorsignal 10 zunächst im Block 212 mit dem ersten Schwellwert verglichen, der beispielsweise auf einen Beschleunigungswert von 10g gesetzt ist. Ist das Sensorsignal 10 kleiner als der erste Schwellwert, dann wird im Block 220 die Schaltschwelleninformation 224 "Schalter 1 offen" erzeugt und gleichzeitig mit der Schaltschwelleninformation 228 "Schalter 2 offen" an die Schalterschwellenauswerteeinheit 230 übertragen, da im dargestellten Ausführungsbeispiel der zweite Schwellwert höher als der erste Schwellwert ist und beispielsweise auf einen Beschleunigungswert von 25g gesetzt ist.

Ist der Sensorwert 10 größer als der erste Schwellwert, dann wird die Schaltschwelleninfbrmation 222 "Schalter 1 geschlossen" an die Schalterschwellenauswerteeinheit 230 übertragen, wobei zusätzlich der Vergleich mit der zweiten Schwellwert im Block 214 durchgeführt wird. Ist auch der zweite Schwellwert überschritten, dann wird die Schaltschwelleninformation 226 "Schalter 2 geschlossen" an die Schalterschwellenauswerteeinheit 230 übertragen, wenn nicht, dann wird die Schaltschwelleninformation 228 "Schalter 2 offen" an die Schalterschwellenauswerteeinheit 230 übertragen. Durch Bestimmen der Zeitpunkte und/oder durch Bestimmen der zeitlichen Differenz zwischen den Schaltvorgängen klassifiziert die Schaltschwellenauswerteeinheit 230 die Crashschwere.

Aus den Fußgängerschutzsensoren mit einem niedrigen Wertebereich von kleiner 50g lässt sich somit sehr einfach ohne großen Zusatzaufwand ein virtueller Upfront-Switch nachbilden, mit dem die Crashschwerebestimmung und die Offseterkennung ausreichend genau durchgeführt werden kann.

Die Crashschwereerkennung geht wie oben ausgeführt ist über den Schaltzeitpunkt. Der Schaltzeitpunkt kann entweder relativ zu einem Auftreffzeitpunkt von einer zusätzlichen PreCrash-Sensorik 300 oder aber auch einfach relativ zum Überschreiten einer Art Rauschschwelle bestimmt werden, welche im Bloch 210 als erster Schwellwert gesetzt werden und gleichzeitig einen Startzeitpunkt für eine Crasherkennung repräsentieren kann. Ist das Fahrzeug zusätzlich mit einer PreCrash-Sensorik ausgestattet, kann als Startzeitpunkt der Auftreffzeitpunkt verwendet werden, der mit Hilfe der PreCrash-Sensorik sehr genau bestimmt werden kann.

Die Auswerteeinheit 200 kann eine weitere Zeitinformation aus der Zeitspanne erzeugen, die zwischen einem Auslösen der ersten Schaltschwelle 222 und einem Auslösen der zweiten Schaltschwelle 226 verstreicht, wobei zweite Schwellwert 214 höher als der erste Schwellwert 212 ist. Diese weitere Zeitinformation kann der Bewertung der Crashschwere zugrunde gelegt werden, so dass die Genauigkeit des Kontaktzeitpunkts für die Bewertung nicht mehr so wichtig ist.

Der dargestellte virtuelle zweistufigen Upfront-Switch kann für mehrstufige oder übergangslose Insassenschutzmittel, z.B. zweistufige Airbags oder stufenlose Airbags, verwendet werden, deren mehrere Stufen jeweils von einer zugeordneten von der Auswerteeinheit 200 erzeugten Schaltschwelle 222, 226 auslösbar sind. Der virtuelle Upfront-Switch hat gegenüber dem herkömmlichen Upfront-Switch wesentliche Vorteile.

So muss beim herkömmlichen UFSW die Schaltschwelle mechanisch durch Anpassung der Federkonstante und des Magnetgewichts an das jeweilige Fahrzeug und die Einbauposition eingestellt werden. Der mechanische UFSW kann dann nur bei genau diesem Fahrzeug mit der genau festgelegten Fahrzeugstruktur an genau der festgelegten Stelle eingesetzt werden. Ergibt sich eine spätere Änderung der Einbauposition, so muss der gesamte UFSW neu entwickelt werden.

Bei dem erfindungsgemäßen virtuellen UFSW können die Schaltschwellen 212, 214 durch Einstellen des entsprechenden Schwellwertparameters sehr einfach und schnell verändert werden und können daher sehr flexibel an verschiedene Fahrzeugstrukturen angepasst werden. Bei mehrstufigen virtuellen UFSW können die verschiedenen Schaltschwellen 212, 214 individuell durch Ändern der Schwellwerlparameter schnell und leicht angepasst werden.

Die Sensordaten 10 können Beschleunigungsdaten und/oder absolute Integrale der Beschleunigungsdaten und/oder Fensterintegrale der Beschleunigungsdaten umfassen. Die zugehörigen Schwellwerte 212, 214 können eine Ableitung der Integralwerte der Beschleunigungsdaten und/oder direkte Integralwerte umfassen.

## Patentansprüche

1. Kontaktsensorik für ein Fahrzeug mit mindestens einem Sensor (12, 14), welcher Sensordaten (10) in einem niedrigen Wertebereich erzeugt, der für eine Erkennung einer Kollision mit einem Fußgänger optimiert ist, **gekennzeichnet durch** eine Auswerteeinheit (200), welche die Sensordaten (10) zu einer Crashschwerebestimmung und/oder zu einer Offseterkennung und/oder zu einer Plausibilitätsprüfung mit mindestens einem Schwellwert (212, 214) vergleicht, wobei die Auswerteeinheit (200) und der mindestens eine Sensor (12, 14) einen virtuellen Upfront-Switch bilden.

2. Kontaktsensorik nach Anspruch 1, **dadurch gekennzeichnet, dass** die Auswerteeinheit (200) eine Zeitinformation aus den Zeitpunkten erzeugt, an denen die Sensordaten (10) den mindestens einen Schwellwert (212, 214) erreichen und/oder überschreiten und dadurch eine zugehörige Schaltschwelle (222, 226) auslösen.

3. Kontaktsensorik nach Anspruch 2, **dadurch gekennzeichnet, dass** die Auswerteeinheit (200) eine erste Zeitinformation aus der Zeitspanne erzeugt, die zwischen einem Auslösen einer ersten Schaltschwelle (222) und einem Auslösen einer zweiten Schaltschwelle (226) verstreicht, wobei ein erster Schwellwert (212) der ersten Schaltschwelle (222) und ein zweiter Schwellwert (214) der zweiten Schaltschwelle (226) zugeordnet ist und der zweite Schwellwert (214) höher als der erste Schwellwert (212) ist.

4. Kontaktsensorik nach einem der Ansprüche 1 bis 3, **dadurch gekennzeichnet, dass** der erste Schwellwert (212) eine Rauschschwelle repräsentiert, aus deren Überschreiten die Auswerteeinheit (200) einen Auftreffzeitpunkt eines Objektes erzeugt.

5. Kontaktsensorik nach einem der Ansprüche 1 bis 3, **gekennzeichnet durch** eine PreCrash-Sensorik (300), die eine zweite Zeitinformation zur Verfügung stellt, welche den Auftreffzeitpunkt eines Objektes repräsentiert.

6. Kontaktsensorik nach einem der Ansprüche 1 bis 5, **dadurch gekennzeichnet, dass** die Auswerteeinheit (200) die Schwellwerte (212, 214) in Abhängigkeit von Schwellwertparametern verändert.

7. Kontaktsensorik nach einem der Ansprüche 1 bis 6, **dadurch gekennzeichnet, dass** die Sensordaten (10) Beschleunigungsdaten und/oder absolute Integrale der Beschleunigungsdaten und/oder Fensterintegrale der Beschleunigungsdaten umfassen.

8. Kontaktsensorik nach Anspruch 7, **dadurch gekennzeichnet, dass** die Schwellwerte (212, 214) eine Ableitung der Integralwerte der Beschleunigungsdaten und/oder direkte Integralwerte umfassen.

9. Kontaktsensorik nach einem der Ansprüche 1 bis 8, **gekennzeichnet durch** mehrstufige Insassenschutzmittel, deren mehrere Stufen jeweils von einer zugeordneten von der Auswerteeinheit (200) erzeugten Schaltschwelle (222, 226) auslösbar sind.

## Claims

1. Contact sensor system for a vehicle having at least one sensor (12, 14) which generate sensor data (10) in a low value range which is optimized for detection of a collision with a pedestrian, **characterized by** an evaluation unit (200) which compares the sensor data (10) with at least one threshold value (212, 214) for determination of the severity of a crash and/or for detection of offset and/or for plausibility checking, wherein the evaluation unit (200) and the at least one sensor (12, 14) form a virtual upfront switch.

2. Contact sensor system according to Claim 1, **characterized in that** the evaluation unit (200) generates time information from the times at which the sensor data (10) reach and/or exceed the at least one threshold value (212, 214) and as a result trigger an associated switching threshold (222, 226).

3. Contact sensor system according to Claim 2, **characterized in that** the evaluation unit (200) generates first time information from the time period which passes between triggering of a first switching threshold (222) and triggering of a second switching threshold (226), wherein a first threshold value (212) is assigned to the first switching threshold (222), and a second threshold value (214) is assigned to the second switching threshold (226), and the second threshold value (214) is higher than the first threshold value (212).

4. Contact sensor system according to one of Claims 1 to 3, **characterized in that** the first threshold value (212) represents a noise threshold, at the upward transgression of which the evaluation unit (200) generates an impact time of an object.

5. Contact sensor system according to one of Claims 1 to 3, **characterized by** a precrash sensor system (300) which makes available second time information which represents the impact time of an object.

6. Contact sensor system according to one of Claims 1 to 5, **characterized in that** the evaluation unit (200) changes the threshold values (212, 214) as a function of threshold value parameters.

7. Contact sensor system according to one of Claims 1 to 6, **characterized in that** the sensor data (10) comprises acceleration data and/or absolute integrals of the acceleration data and/or window integrals of the acceleration data.

8. Contact sensor system according to Claim 7, **characterized in that** the threshold values (212, 214) comprise a derivative of the integral values of the acceleration data and/or direct integral values.

9. Contact sensor system according to one of Claims 1 to 8, **characterized by** a multi-stage vehicle occupant protection means whose multiple stages can each be triggered by an assigned switching threshold (222, 226) which is generated by the evaluation unit (200).

## Revendications

1. Système de capteurs de contact pour un véhicule comportant au moins un détecteur (12, 14) qui génère des données de capteur (10) dans une plage de valeurs faibles, optimisée pour détecter une collision avec un piéton,
**caractérisé par**
une unité d'exploitation (200) qui compare les données de capteur (10) à au moins une valeur de seuil (212, 214) pour déterminer la gravité d'une collision et/ou détecter un décalage et/ou faire un contrôle de plausibilité, et formant au moins un capteur (12, 14) d'un commutateur virtuel de façade.

2. Système de capteurs de contact selon la revendication 1,
**caractérisé en ce que**
l'unité d'exploitation (200) génère une information de temps à partir des instants auxquels les données de capteur (10) atteignent au moins une valeur de seuil (212, 214) et/ou la dépassent et déclenchent ainsi un seuil de commutation correspondant (222, 226).

3. Système de capteurs de contact selon la revendication 2,
**caractérisé en ce que**
l'unité d'exploitation (200) génère une première information de temps à partir de la période de temps comprise entre un déclenchement d'un premier seuil de commutation (222) et un déclenchement d'un second seuil de commutation (226),
une première valeur (212) étant associée au premier seuil (222) et une seconde valeur (214) étant associée au second seuil (226) et la seconde valeur de seuil (214) est supérieure à la première valeur de seuil (212).

4. Système de capteurs de contact selon l'une des revendications 1 à 3,
**caractérisé en ce que**
la première valeur de seuil (212) représente un seuil de bruit pour le dépassement duquel l'unité d'exploitation (200) génère un point de rencontre avec un objet.

5. Système de capteurs de contact selon l'une des revendications 1 à 3,
**caractérisé par**
un système de capteurs de pré-collision (300) fournissant une seconde information de temps représentant le point de rencontre d'un objet.

6. Système de capteurs de contact selon l'une des revendications 1 à 5,
**caractérisé en ce que**
l'unité d'exploitation (200) modifie les valeurs de seuil (212, 214) en fonction de paramètres de valeurs de seuil.

7. Système de capteurs de contact selon l'une des revendications 1 à 6,
**caractérisé en ce que**
les données de capteurs (10) comprennent les données d'accélération et/ou l'intégrale absolue des données d'accélération et/ou l'intégrale de fenêtre des données d'accélération.

8. Système de capteurs de contact selon la revendication 7,
**caractérisé en ce que**
les valeurs de seuil (212, 214) comprennent une dérivée des valeurs intégrales des données d'accélération et/ou directement les valeurs d'intégrales.

9. Système de capteurs de contact selon l'une des revendications 1 à 8,
**caractérisé par**
des moyens de protection des occupants à plusieurs niveaux dont les différents niveaux sont déclenchés chaque fois par un seuil de commutation (222, 226) généré par l'unité d'exploitation (200).
